# EUROPÄISCHE PATENTSCHRIFT

(11) **EP 1 532 395 B1**
(45) Veröffentlichungstag und Bekanntmachung des Hinweises auf die Patenterteilung: **16.11.2016**
(21) Anmeldenummer: 03790605.4
(22) Anmeldetag: 23.06.2003
(51) Int. Cl.: F23C 13/00

(54) **VERFAHREN UND VORRICHTUNG ZUM VERMISCHEN VON FLUIDSTRÖMUNGEN**
METHOD AND DEVICE FOR MIXING FLUID FLOWS
PROCEDE ET DISPOSITIF DE MELANGE DE FLUX FLUIDIQUES

(30) Priorität: 30.08.2002 US 406976 P
(43) Veröffentlichungstag der Anmeldung: 25.05.2005
(73) Patentinhaber: General Electric Technology GmbH, 5400 Baden (CH)
(72) Erfinder: CARRONI, Richard, CH-5443 Niederrohrdorf (CH); GRIFFIN, Timothy, CH-5408 Ennetbaden (CH)
(74) Vertreter: Bernotti, Andrea
(86) Internationale Anmeldenummer: PCT/CH2003/000407
(87) Internationale Veröffentlichungsnummer: WO 2004/020902

(56) Entgegenhaltungen:
- EP-A- 0 434 539
- EP-A- 1 179 709
- DE-A- 10 003 090
- US-A- 4 072 007
- US-A1- 2001 038 576
- US-A1- 2003 058 737
- US-B1- 6 179 608
- US-B1- 6 334 769

## Beschreibung

### Technisches Gebiet

Die vorliegenden Erfindung betrifft ein Verfahren sowie eine Vorrichtung zum Vermischen von wenigstens zwei separaten Fluidströmungen, insbesondere für einen Brenner einer Kraftwerksanlage.

Eine Reihe von Anwendungen benötigt eine gründliche Vermischung separater Gasströmungen. Eine solche Anwendung ist beispielsweise eine katalytische Verbrennung zur Erzeugung von Heißgas zum Betreiben einer Gasturbine, bei der ein gasförmiger Brennstoff, in der Regel Erdgas, und ein gasförmiger Oxidator, in der Regel Luft, intensiv durchmischt werden müssen, bevor dieses Brennstoff-Oxidator-Gemisch in den jeweiligen Katalysator eintritt. Auch konventionelle Magermix-Vormisch-Brenner benötigen eine möglichst homogene Durchmischung des zugeführten Brennstoff-Oxidator-Gemischs. Eine unzureichende Durchmischung kann zu einem uneinheitlichen Verbrennungsprozess führen, bei dem relativ große Temperaturunterschiede festgestellt werden können, wobei sich in Zonen mit besonders hohen Temperaturen vermehrt unerwünschtes NOₓ bildet.

Die US 5 202 303 und die US 5 328 359 zeigen Katalysatoren, die aus gewelltem oder gefaltetem Bahnmaterial aufgebaut sind. Dabei bilden die Falten oder Wellen des Bahnmaterials eine Vielzahl von durchströmbaren Kanälen. Bei der Durchströmung eines derartigen Katalysators wird ein Teil eines Brennstoff-Oxidator-Gemischs verbrannt. Um bei einem solchen Katalysator eine Überhitzung zu vermeiden, muss die Verbrennung auf nur einen Teil des den Katalysator durchströmenden Gemischs beschränkt werden. Zu diesem Zweck sind nur einige der Kanäle, z.B. durch eine entsprechende Beschichtung, katalytisch aktiv ausgebildet, während die anderen Kanäle katalytisch inaktiv sind. Bei der Durchströmung des Katalysators findet dann nur innerhalb der katalytisch aktiven Kanäle eine Verbrennung statt, während die Durchströmung der katalytisch inaktiven Kanäle den Katalysator kühlt. Bei den bekannten Katalysatoren sind die Wellen oder Falten außerdem gegenüber einer Hauptdurchströmungsrichtung mehrfach hin- und hergeneigt. Die Schichtung erfolgt dann so, dass die Neigungen bei benachbarten Schichten so zueinander versetzt sind, dass die Falten oder Wellen der einen Schicht nicht in die Falten oder Wellen der benachbarten Schicht eindringen können. Dabei sind diejenigen Kanäle, die an einer Seite des jeweiligen Bahnmaterials durch dessen Wellen oder Falten gebildet sind, zu denjenigen Kanälen hin offen, die an der zugewandten Seite des benachbarten Bahnmaterials durch dessen Wellen oder Falten gebildet sind. Das bedeutet, dass zwischen benachbarten Bahnmaterialien die Fluidströmung ständig zwischen den zueinander offenen Kanälen wechseln kann, mit der Folge, dass die Gasströmung am Austritt des jeweiligen Katalysators keine definierte Ausströmungsrichtung besitzt.

Die US 2001/038576 beschreibt einen statischen Mischer.

### Darstellung der Erfindung

Hier will die Erfindung Abhilfe schaffen. Die Erfindung, wie sie in den Ansprüchen gekennzeichnet ist, beschäftigt sich mit dem Problem, für das Vermischen von wenigstens zwei separaten Fluidströmungen einen vorteilhaften Weg aufzuzeigen.

Erfindungsgemäß wird dieses Problem durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, die Vermischung mit Hilfe mehrerer gegenläufiger Drallströmungen zu bewirken, die spiral- oder ringförmig und bezüglich einer sich in der Hauptströmungsrichtung erstreckenden, axialen Längsmittelachse konzentrisch angeordnet sind. Durch die Ausbildung einer möglichst großen Anzahl gegensinnig rotierender Drallströmungen, die ineinander konzentrisch angeordnet sind, werden eine entsprechend große Anzahl konzentrischer und ebenfalls ringförmiger Scherschichten ausgebildet, die zu einer Fluiddurchmischung führen. Dabei hängt die Güte der erzielbaren Durchmischung von der Anzahl der ausgebildeten Scherschichten ab; je mehr Scherschichten, desto besser ist die Durchmischung.

Erfindungsgemäß wird vorgesehen, wenigstens zwischen zwei radial benachbarten Drallströmungen eine ringförmige, konzentrische und drallfreie Axialströmung zu erzeugen. Auch hierdurch entstehen Scherschichten, die zur Durchmischung beitragen. Gleichzeitig bewirkt die Axialströmung eine axiale Ausrichtung der Drallströmungen im Verlaufe der Durchmischung. Mit Hilfe dieser Maßnahme kann somit die Misch-Strömung hinsichtlich Strömungsgeschwindigkeit und Strömungsrichtung homogenisiert werden.

Weitere Merkmale und Vorteile der vorliegenden Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,
Fig. 1 eine stark vereinfachte Prinzipdarstellung eines Längsschnitts durch einen Strömungskanal, in dem eine erfindungsgemäße Vorrichtung angeordnet ist,
Fig. 2 eine perspektivische Ansicht auf eine Vorrichtung, die nicht Teil der Erfindung ist,
Fig. 3 eine Ansicht entsprechend den Schnittlinien III in Fig. 1 auf einen Ausschnitt der Vorrichtung gemäß Fig. 2,
Fig. 4 eine Ansicht wie in Fig. 3, gemäß einer Ausführungsform,
Fig. 5 eine Ansicht entsprechend den Schnittlinien V in Fig. 1 auf einen Ausschnitt einer Gleichrichterstruktur,
Fig. 6 eine vereinfachte Ansicht auf Bahnen zur Herstellung einer Drallerzeugerstruktur gemäß Fig. 3,
Fig. 7 eine Ansicht wie in Fig. 6, jedoch für die Herstellung einer Drallerzeugerstruktur gemäß Fig. 4,
Fig. 8 eine Ansicht wie in Fig. 6, jedoch zur Herstellung einer Gleichrichterstruktur gemäß Fig. 5.

### Wege zur Ausführung der Erfindung

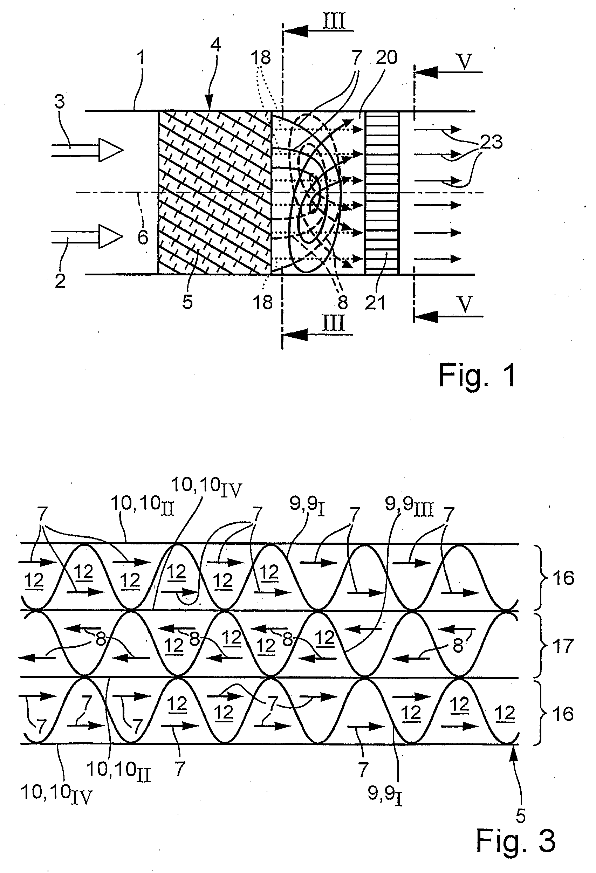

Fig. 1 zeigt einen Kanalabschnitt 1, in den wenigstens zwei separate Fluidströmungen 2 und 3 eingeleitet werden. Vorzugsweise führt der Kanalabschnitt 1 zu einem hier nicht gezeigten Brenner oder zu einer Brennkammer zum Beheizen einer Gasturbine einer Kraftwerksanlage. Vorzugsweise handelt es sich bei den Fluidströmungen dann um eine Brennstoffströmung 2 und eine Oxidatorströmung 3, wobei als Brennstoff vorzugsweise Erdgas und als Oxidator zweckmäßig Luft verwendet wird.

Um eine intensive Durchmischung der beiden Fluidströmungen 2, 3 zu erzielen, ist im Kanalabschnitt 1 eine erfindungsgemäße Vorrichtung 4 angeordnet. Die Vorrichtung 4 umfässt eine Drallerzeugerstruktur 5, die so ausgebildet ist, dass bei ihrer Durchströmung mehrere, bezüglich einer axialen Längsmittelachse 6 konzentrisch angeordnete, ringförmige Drallströmungen 7, 8 generiert werden, derart, dass radial benachbarte Drallströmungen 7, 8 jeweils einen entgegengesetzten Drehsinn aufweisen. In Fig. 1 sind zur Verdeutlichung daher die einen Drallströmungen 7 mit durchgezogenen Linien dargestellt, während die gegensinnigen anderen Drallströmungen 8 mit unterbrochenen Linien gezeichnet sind.

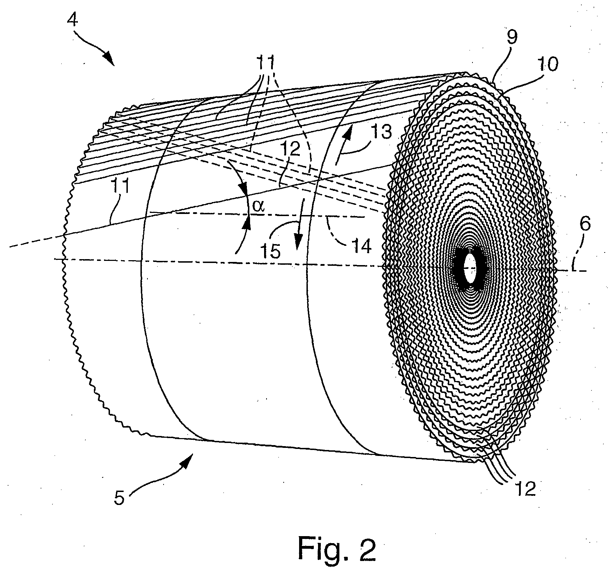

Entsprechend Fig. 2 ist die Drallerzeugerstruktur 5 der Vorrichtung 4 vorzugsweise durch eine spiralförmige Wicklung mehrerer Bahnen 9, 10 aus gewelltem oder gefaltetem ersten Bahnmaterial 9 und flachem oder glattem zweiten Bahnmaterial 10 hergestellt. Das erste Bahnmaterial 9 besitzt somit Wellen oder Falten 11, die durch die spezielle Art der Schichtung eine Vielzahl von Kanälen 12 bilden, durch welche die Drallerzeugerstruktur 5 durchströmbar ist. Durch den gewählten Aufbau der Drallerzeugerstruktur 5 sind die Kanäle 12 bezüglich der Längsmittelachse 6 in konzentrischen Ringen bzw. in konzentrischen Spiralen angeordnet.

Das sichtbare, äußerste erste Bahnmaterial 9 ist mit Bezug auf seine Falten oder Wellen 11 so orientiert, dass die dadurch gebildeten Kanäle 12 gegenüber der Längsmittelachse 6 in der Umfangsrichtung in einer durch einen Pfeil repräsentierten ersten Richtung 13 geneigt sind. Durch diese Neigung ergibt sich ein Winkel α zwischen dem jeweiligen Kanal 12 bzw. der jeweiligen Welle oder Falte 11 und einer Achse 14, die durch den jeweiligen Kanal 12 und parallel zur Längsmittelachse 6 verläuft. Beim radial nach innen benachbarten ersten Bahnmaterial 9 sind die Wellen oder Falten 11 gegensinnig orientiert, so dass die dadurch gebildeten Kanäle 12 gegenüber der Längsmittelachse 6 in der Umfangsrichtung in einer durch einen Pfeil repräsentierten zweiten Richtung 15 geneigt sind, die sich gegensinnig zur ersten Richtung 13 erstreckt. Dementsprechend liegt zwischen den durch unterbrochene Linien angedeuteten Falten oder Wellen 11 bzw. den dadurch gebildeten Kanälen 12 und der entsprechend radial nach innen versetzten Achse 14 ein Gegenwinkel -α vor, der betragsmäßig etwa gleich groß ist wie der im benachbarten Bahnmaterial 9. In radialer Richtung setzt sich dann die wechselweise Orientierung der Kanäle 12 fort.

Dabei kann es zweckmäßig sein, dass die Winkel α bzw. -α radial von außen nach innen kleiner werden und in der Nähe der Längsmittelachse 6 nicht oder nur noch gering vom Wert Null abweichen.

Erfindungsgemäß liegen weitere erste Bahnmaterialien 9 vor, die innerhalb der Drallerzeugerstruktur 5 so orientiert sind, dass ihre Falten oder Wellen 11 bzw. die dadurch gebildeten Kanäle 12 parallel zur Längsmittelachse 6 verlaufen, so dass der Winkel α den Wert Null besitzt.

Bei der hier beschriebenen Ausführungsform sind die Bahnmaterialien 9, 10 in der Drallerzeugerstruktur 5 so angeordnet, dass sich einzelne Ringe oder Spiralen ausbilden, deren Durchströmung jeweils eine linksdrehende Drallströmung oder eine rechtsdrehende Drallströmung oder eine drallfreie Axialströmung erzeugen. Es ist klar, dass bei einer anderen Ausführungsform die Anordnung der Materialbahnen 9, 10 so erfolgen kann, dass jeweils wenigstens zwei Ringe oder Spiralen, die bei ihrer Durchströmung gleich gerichtete Strömungen erzeugen, zu einer Gruppe zusammengefaßt sind, wobei sich dann in radialer Richtung Gruppen abwechseln, die linksdrehende Drallströmungen oder rechtsdrehende Drallströmungen oder drallfreie Axialströmungen erzeugen. Im vorliegenden Zusammenhang wird unter einer Spirale eine Wicklung um die Wickelachse 6 verstanden, die sich in der Umfangsrichtung wenigstens um 360° erstreckt.

Entsprechend Fig. 3 ist die Schichtung des gefalteten oder gewellten ersten Bahnmaterials 9 und des flachen oder glatten zweiten Bahnmaterials 10 bezüglich der Längsmittelachse 6 konzentrisch und ringförmig oder spiralförmig durchgeführt. Hierdurch bilden die Kanäle 12 erste Ringe oder Spiralen 16 und zweite Ringe oder Spiralen 17, die in Fig. 3 durch geschweifte Klammern gekennzeichnet sind.

In den ersten Ringen oder Spiralen 16 sind die zugehörigen Kanäle 12 in der ersten Richtung 13 gegenüber der Längsmittelachse 6 in der Umfangsrichtung geneigt. Die Neigung und Ausrichtung der Kanäle 12 der ersten Ringe oder Spiralen 16 ist dabei so gewählt, dass sich bei einer Durchströmung für jeden ersten Ring 16 bzw. für jede erste Spirale 16 die in der ersten Richtung 13 drehende, ringförmige Drallströmung 7 ergibt, was in Fig. 3 durch entsprechende Pfeile symbolisiert ist.

Im Unterschied dazu sind die Kanäle 12 in den zweiten Ringen oder Spiralen 17 in der zweiten Richtung 15 gegenüber der Längsmittelachse 6 in Umfangsrichtung geneigt. Dementsprechend erzeugen die Kanäle 12 der zweiten Ringe oder Spiralen 17 bei ihrer Durchströmung für jeden zweiten Ring 17 bzw. für jede zweite Spirale 17 die in der zweiten Richtung 15 drehende, ringförmige Drallströmung 8, was in Fig. 3 wieder durch entsprechende Pfeile symbolisiert ist.

Wesentlich ist hierbei, dass sich gemäß Fig. 3 die ersten Ringe oder Spiralen 16 und die zweiten Ringe oder Spiralen 17 bezüglich der Längsmittelachse 6 in radialer Richtung abwechseln. Auf diese Weise erzeugt die Drallerzeugerstruktur 5 bei ihrer Durchströmung eine Vielzahl von ringförmigen Drallströmungen 7, 8 also Ringdrallströmungen 7, 8, die in radialer Richtung abwechselnd in der ersten Richtung 13 bzw. in der zweiten Richtung 15 drehen.

Ein solches komplexes Strömungssystem konzentrischer, gegenläufiger Ringdrallströmungen 7, 8 besitzt eine entsprechend große Anzahl tangentialer Scherschichten, die sich jeweils zwischen aneinander angrenzenden Strömungen mit unterschiedlichen Strömungsgeschwindigkeiten und/oder Strömungsrichtungen ausbilden. In derartigen Scherschichten erfolgt die Durchmischung der benachbarten Strömungen, so dass eine große Anzahl von Scherschichten mit einer entsprechend intensiven Strömungsdurchmischung einhergeht. Dies hat zur Folge, dass bei der erfindungsgemäßen Strömungsdurchmischung bereits nach einer relativ kurzen Mischstrecke eine intensive Durchmischung der der Vorrichtung 4 zugeführten Fluidströmungen 2, 3 vorliegt.

Um der durchmischten Strömung eine möglichst homogene axiale Ausrichtung zu geben, wird erfindungsgemäß vorgesehen, zusätzlich zu den gegensinnig rotierenden Drallströmungen 7, 8 wenigstens eine oder vorzugsweise mehrere, ringförmige, ebenfalls konzentrisch zur Längsmittelachse 6 angeordnete möglichst drallfreie Axialströmungen auszubilden. Dabei werden die Axialströmungen jeweils radial zwischen zwei benachbarten, entgegengesetzt rotierenden Drallströmungen 7, 8 angeordnet. In Fig. 1 sind diese Axialströmungen durch geradlinige, gepunktete Pfeile 18 repräsentiert.

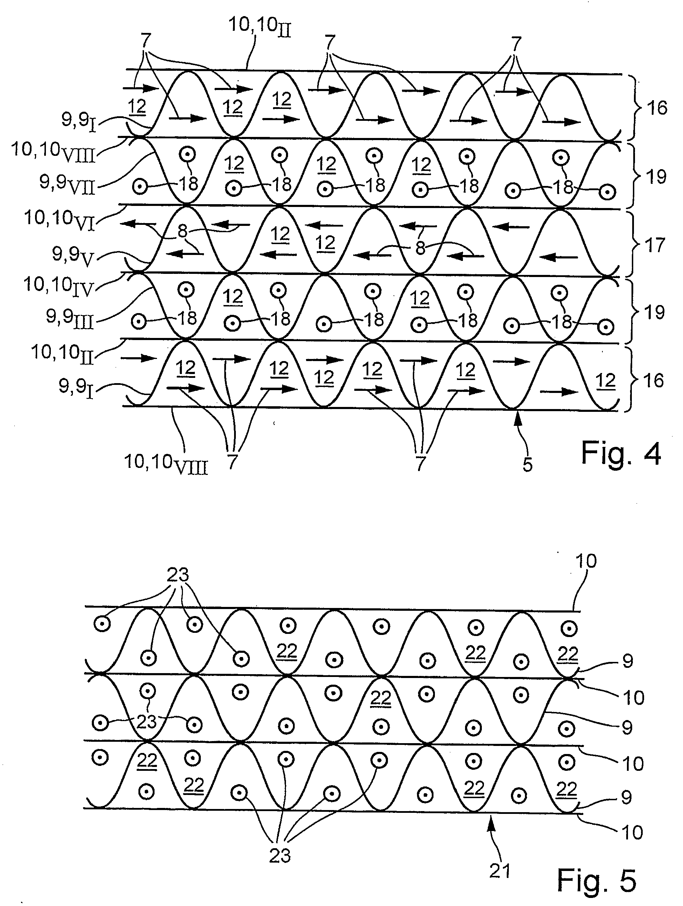

Fig. 4 gibt einen Ausschnitt der Drallerzeugerstruktur 5 wieder, mit deren Hilfe bei ihrer Durchströmung neben den Drallströmungen 7, 8 auch die Axialströmungen 18 erzeugt werden. Zu diesem Zweck wird hier jeweils zwischen einem ersten Ring 16 bzw. einer ersten Spirale 16 und einem zweiten Ring 17 bzw. einer zweiten Spirale 17 ein dritter Ring 19 bzw. eine dritte Spirale 19 angeordnet. Für die dritten Ringe oder Spiralen 19 wird das jeweils verwendete gewellte oder gefaltete erste Bahnmaterial 9 so orientiert, dass seine Falten oder Wellen 11 bzw. die dadurch gebildeten Kanäle 12 parallel zur Längsmittelachse 6 der Drallerzeugerstruktur 5 verlaufen. Bei ihrer Durchströmung erzeugen die dritten Ringe oder Spiralen 19 für jeden dritten Ring 19 bzw. für jede Spirale 19 eine ringförmige Axialströmung 18, was in Fig. 4 durch mit 18 bezeichnete Pfeilspitzen symbolisiert ist.

Zwischen einer solchen ringförmigen Axialströmung 18 und der jeweils benachbarten Drallströmung 7 oder 8 bildet sich ebenfalls eine tangentiale Scherschicht aus, die zur Durchmischung beiträgt. Gleichzeitig erfolgt dabei eine Umlenkung der jeweiligen Drallströmung 7 oder 8 in axialer Richtung. Mit Hilfe dieser zusätzlichen Axialströmungen 18 kann somit die Gemischströmung axial ausgerichtet werden. Eine solche axiale Ausrichtung kann für bestimmte Anwendungsformen von Vorteil sein. Beispielsweise dann, wenn ein Brennstoff-Oxidator-Gemisch in einen Katalysator, einen Brenner oder in eine Brennkammer eingeleitet werden soll.

Entsprechend Fig. 1 kann die Vorrichtung 4 stromab der Drallerzeugerstruktur 5 am Ende einer Mischzone 20 eine Gleichrichterstruktur 21 aufweisen, die bei ihrer Durchströmung eine axiale Ausrichtung der zugeführten Mischströmung bewirkt.

Entsprechend Fig. 5 kann die Gleichrichterstruktur 21 zweckmäßig aus einer Vielzahl parallel zur Längsmittelachse 6 verlaufender Kanäle 22 bestehen, die bei ihrer Durchströmung die gewünschte axiale Ausrichtung der Gemischströmung bewirken. Vorzugsweise wird auch die Gleichrichterstruktur 21 durch eine Schichtung gewellter oder gefalteter erster Bahnmaterialien 9 und flacher oder glatter zweiter Bahnmaterialien 10 aufgebaut. Dabei bilden auch hier die einzelnen Wellen oder Falten 11 die parallelen Kanäle 22 aus. Die axial ausgerichtete Gemischströmung ist in den Fig. 1 und 5 jeweils mit 23 bezeichnet und durch Pfeile (Fig. 1) bzw. durch Pfeilspitzen (Fig. 5) symbolisiert.

Um einen möglichst geringen Druckabfall bei der Durchströmung der Gleichrichterstruktur 21 zu erhalten, sind die Kanäle 22 der Gleichrichterstruktur 21 vergleichsweise kurz, insbesondere kürzer als die Kanäle 12 der Drallerzeugerstruktur 5. Außerdem können die Kanäle 22 der Gleichrichterstruktur 21 vergleichsweise große Querschnittsflächen aufweisen; insbesondere sind ihre Querschnittsflächen größer als diejenigen der Kanäle 12 der Drallerzeugerstruktur 5.

Zweckmäßig sind die Querschnittsflächen der Kanäle 12 vergleichsweise klein, so dass die Drallerzeugerstruktur 5 gleichzeitig einen wirksamen Schutz vor einem Flammenrückschlag bildet. Beispielsweise besitzen die Kanäle 12 einen Durchmesser von 0,5 mm bis 5 mm.

Bei einer Weiterbildung kann in die Drallerzeugerstruktur 5 die Funktion eines Katalysators integriert sein. Zweckmäßig erfolgt dies dadurch, dass einige der Kanäle 12 katalytisch aktiv ausgebildet sind, während die anderen Kanäle 12 katalytisch inaktiv sind. Katalytisch aktive Kanäle 12 können beispielsweise durch katalytisch aktive Oberflächen in den jeweiligen Kanälen 12 realisiert werden. Zweckmäßig wäre dabei eine Ausgestaltung, bei der sich katalytisch aktive und katalytisch inaktive Kanäle 12 abwechseln, so dass die Strömung durch die katalytisch inaktiven Kanäle 12 zur Kühlung der Drallererzeugerstruktur 5 dient.

Die Durchmischung der zugeführten separaten Fluidströmungen 2 und 3 kann auch dadurch verbessert werden, dass benachbarte Kanäle 12 der Drallerzeugerstruktur 5 in einem vom Austrittsende der Drallerzeugerstruktur 5 beabstandeten Abschnitt miteinander kommunizieren. In diesem gasdurchlässigen Abschnitt kann die Kommunikationsverbindung z.B. über Durchtrittsöffnungen, Bohrungen, Porositäten oder gasdurchlässige Bahnmaterialien 9, 10 oder gasdurchlässige Strukturen, wie Gitter- oder Netzstrukturen, ermöglicht werden. Außerdem kann diese Kommunikationsverbindung so angeordnet und/oder ausgestaltet sein, dass Kanäle, die innerhalb desselben Rings 16, 17, 19 oder innerhalb derselben Spirale 16, 17, 19 benachbart sind, miteinander kommunizieren. Alternativ oder zusätzlich kann die Kommunikationsverbindung so angeordnet und/oder ausgestaltet sein, dass Kanäle 12, die in benachbarten Ringen oder Spiralen 16, 17,19 aneinander grenzen, miteinander kommunizieren. Wesentlich ist, dass alle Kanäle 12 zumindest am Austrittsende der Drallerzeugerstruktur 5 voneinander getrennt sind und unabhängig voneinander durchströmt sind.

Eine andere Weiterbildung kann vorsehen, dass radial weiter innen angeordnete Kanäle 12 betragsmäßig eine andere Neigung gegenüber der Längsmittelachse 6 besitzen als radial weiter außen angeordnete Kanäle 12. Vorzugsweise nimmt die Neigung der Kanäle 12 gegenüber der Längsmittelachse 6 mit zunehmendem Abstand von der Längsmittelachse 6 zu.

Die erfindungsgemäße Vermischung funktioniert gemäß Fig. 1 wie folgt:
Die beiden separaten Fluidströmungen 2, 3 werden der Drallerzeugerstruktur 5 zugeführt. Bei der Durchströmung der Drallerzeugerstruktur 5 werden aus den beiden Fluidströmungen 2, 3 die genannten, gegenläufigen Drallströmungen 7, 8 erzeugt, die konzentrisch zur Längsmittelachse 6 angeordnet sind und ineinander rotieren. In der Mischzone 20 erfolgt dann eine intensive Durchmischung der Strömung sowie insbesondere eine tangentiale Aufweitung der Strömung.

Erfindungsgemäß erzeugt die Drallerzeugerstruktur 5 außerdem ringförmige Axialströmungen 18, die sich konzentrisch in das Strömungssystem der gegenläufigen Drallströmungen 7, 8 einfügen.

Am Ende der Mischzone 20 kann zusätzlich die Gleichrichterstruktur 21 vorgesehen sein, die bei ihrer Durchströmung eine zusätzlich axiale Ausrichtung der Mischströmung bewirkt. Letztlich verläßt eine mehr oder weniger axial ausgerichtete Strömung 23 die Vorrichtung 4.

In den Fig. 3, 4 und 5 sind die einzelnen Bahnen der Bahnmaterialien 9, 10 zur Vereinfachung eben dargestellt. Es ist klar, dass die einzelnen Bahnen der Bahnmaterialien 9, 10 jeweils um die nicht eingezeichnete Längsmittelachse gekrümmt sind, und zwar entsprechend ihrem jeweiligen radialen Abstand zur Längsmittelachse 6.

Die Drallerzeugerstruktur 5 mit dem Aufbau gemäß Fig. 3 kann zweckmäßig wie folgt hergestellt werden:
Eine erste Bahn 9_{I} aus dem gewellten oder gefalteten ersten Bahnmaterial 9 wird so positioniert, dass seine Wellen oder Falten 11 gegenüber einer Wickelachse, die mit der späteren Längsmittelachse 6 der Drallerzeugerstruktur 5 zusammenfällt, in der ersten Richtung 13 geneigt sind. Auf diese erste Bahn 9_{I} wird dann eine zweite Bahn 10_{II} aus dem glatten oder flachen zweiten Bahnmaterial 10 aufgelegt. Auf die zweite Bahn 10_{II} wird anschließend eine dritte Bahn 9_{III} aus dem ersten Bahnmaterial 9 aufgelegt, derart, dass deren Wellen oder Falten 11 gegenüber der Wickelachse (Längsmittelachse 6) in der entgegengesetzten zweiten Richtung 15 geneigt sind. Auf die dritte Bahn 9_{III} kann dann wieder eine vierte Bahn 10_{IV} aufgelegt werden, die wieder aus dem glatten oder flachen zweiten Bahnmaterial 10 besteht. Anschließend wird die so gebildete Schichtung der Bahnen 9_{I}, 10_{II}, 9_{III}, 10_{IV} spiralförmig um die Wickelachse (Längsmittelachse 6) aufgewickelt. Durch die Wicklung kommt dann auf die vierte Bahn 10_{IV} wieder eine erste Bahn 9_{I} zur Anlage, so dass sich der Schichtaufbau in radialer Richtung wiederholt. Es ist klar, dass die Schichtung statt mit einem gewellten oder gefalteten ersten Bahnmaterial 9 selbstverständlich auch mit einem glatten oder flachen zweiten Bahnmaterial 10 begonnen werden kann, um nach dem Aufwickeln zur Drallerzeugerstruktur 5 zu gelangen.

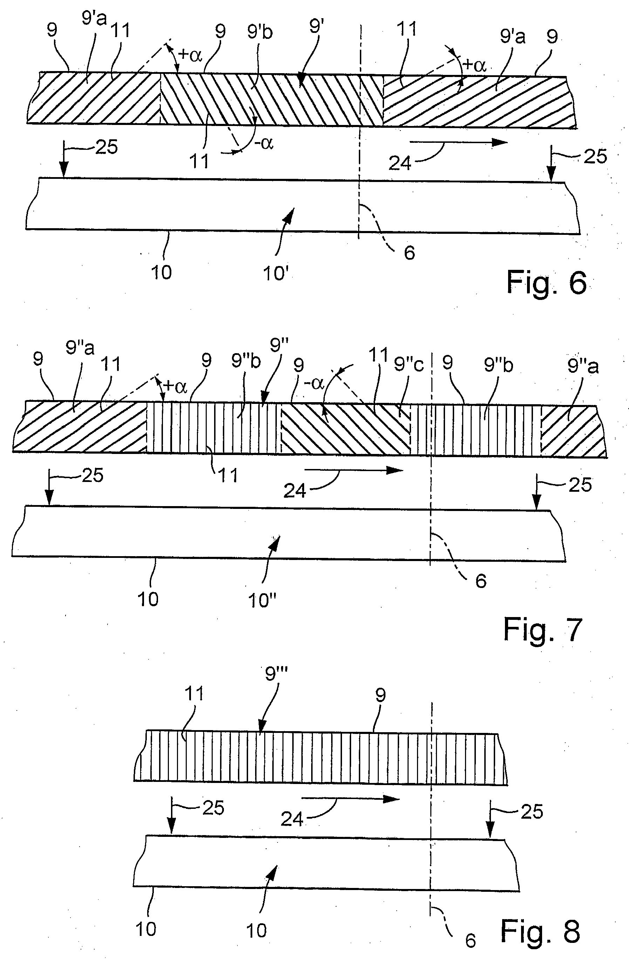

Alternativ kann die Herstellung der Drallerzeugerstruktur 5 mit dem Aufbau gemaß Fig. 3 auch wie folgt hergestellt werden:
Entsprechend Fig. 6 wird eine modifizierte erste Bahn 9' hergestellt, die aus einer Aneinanderreihung mehrerer einzelner Abschnitte aus dem ersten Bahnmaterial 9 besteht, wobei die Neigungen der Wellen oder Falten 11 bei aufeinander folgenden Abschnitten 9'a, 9'b gegenüber der Wickelachse 6 gegensinnig orientiert sind. Diese modifizierte erste Bahn 9' wird dann entsprechend Pfeilen 25 auf eine zweite Bahn 10' aus dem ebenen zweiten Bahnmaterial 10 aufgelegt und zusammen mit dieser um die Wickel- oder Längsmittelachse 6 aufgewickelt. Entsprechend der Länge der einzelnen Abschnitte 9'a, 9'b mit gleicher Falten- oder Wellenneigung ergeben sich dadurch eine oder mehrere spiralförmige Windungen (Ringe oder Spiralen), bei denen die Kanäle 12 jeweils im wesentlichen dieselbe Neigung besitzen. Da sich die Abschnitte 9'a, 9'b mit gleich orientierten Wellen oder Falten 11 in einer durch einen Pfeil symbolisierten Wickelrichtung 24 abwechseln, ergibt sich beim Aufwickeln in radialer Richtung eine Schichtung, in der sich gegensinnig orientierte Ringe oder Spiralen 16, 17 oder gegensinnig orientierte Gruppen von Ringen oder Spiralen 16, 17 abwechseln. Bei dieser Vorgehensweise müssen nur zwei aufeinander gelegte Bahnen 9', 10' aufgewickelt werden, was den Wickelvorgang erleichtert. Denn die Neigung der Wellen oder Falten 11 gegenüber der Wickelachse 6 beim ersten Bahnmaterial 9 bzw. 9' behindert das Aufwickeln. Je mehr Lagen oder Schichten des gewellten oder gefalteten ersten Bahnmaterials 9 gleichzeitig gewickelt werden müssen, desto schwieriger ist der Wickelvorgang.

Die Herstellung der Drallerzeugerstruktur 5 gemäß Fig. 4 kann beispielsweise wie folgt ablaufen:

Zunächst wird wieder eine erste Bahn 9_{I} aus dem gewellten oder gefalteten ersten Bahnmaterial 9 so positioniert, dass sich für die zugehörigen Kanäle 12 gegenüber der Wickelachse 6 eine Neigung in der ersten Richtung 13 ergibt. Auf die erste Bahn 9_{I} wird dann eine zweite Bahn 10_{II} aufgelegt, die aus dem glatten oder flachen zweiten Bahnmaterial 10 besteht.

Auf die zweite Bahn 10_{II} wird dann eine dritte Bahn 9_{III} aus dem ersten Bahnmaterial 9 aufgelegt, die dabei bezüglich ihrer Falten oder Wellen 11 so orientiert ist, dass die dadurch gebildeten Kanäle 12 parallel zur Wickelachse 6 verlaufen. Auf die dritte Bahn 9_{III} wird dann eine vierte Bahn 10_{IV} aus dem zweiten Bahnmaterial 10 aufgelegt. Auf die vierte Bahn 10_{IV} wird dann wieder aus dem ersten Bahnmaterial 9 eine fünfte Bahn 9_{V} aufgelegt, wobei hier die Orientierung der Falten oder Wellen 11 so gewählt ist, dass die dadurch gebildeten Kanäle 12 in der zweiten Richtung 15 gegenüber der Wickelachse 6 geneigt sind. Auf die fünfte Bahn 9_{V} wird dann wieder aus dem zweiten Bahnmaterial 10 eine sechste Bahn 10_{VI} aufgelegt, auf die eine siebte Bahn 9_{VII} aus dem ersten Bahnmaterial 9 aufgelegt wird. Die Orientierung der Falten oder Wellen 11 wird bei der siebten Bahn 9_{VII} wieder so gewählt, dass die dadurch gebildeten Kanäle 12 parallel zur Wickelachse 6 verlaufen. Schließlich wird auf die siebte Bahn 9_{VII} eine achte Bahn 10_{VIII} aus dem zweiten Bahnmaterial 10 aufgelegt. Erst jetzt ist der Schichtaufbau beendet, so dass die aufeinander geschichteten Bahnen um die Wickelachse 6 spiralförmig aufgewickelt werden können. Durch das Aufwickeln kommt dann auf die achte Bahn 10_{VIII} wieder eine erste Bahn 9_{I} zur Auflage. Auch hier ist klar, dass grundsätzlich die erste Bahn statt aus dem ersten Bahnmaterial 9 auch aus dem zweiten Bahnmaterial 10 gebildet sein kann, um den gewünschten Aufbau der Drallerzeugerstruktur 5 zu erzielen.

Auch für die Herstellung der Drallerzeugerstruktur 5 gemäß Fig. 4 gibt es eine alternative Vorgehensweise, die im folgenden anhand von Fig. 7 kurz erläutert wird. Zunächst wird auch hier eine modifizierte erste Bahn 9" aus gewelltem oder gefaltetem erstem Bahnmaterial 9 hergestellt, wobei die erste Bahn 9" aus mehreren Abschnitten 9"a, 9"b, 9"c zusammengebaut ist, die in der Wickelrichtung 24 aneinander gesetzt sind. Die einzelnen Abschnitte 9"a, 9"b, 9"c unterscheiden sich voneinander durch unterschiedliche Ausrichtung ihrer Falten oder Wellen 11 gegenüber der Wickelachse 6. Bei den Abschnitten 9"a und 9"c sind die Wellen oder Falten 11 gegenüber der Wickelachse 6 zwischen 0° und 90° geneigt ausgerichtet, während sie bei dem dazwischen angeordneten Winkelabschnitt 9"b im wesentlichen parallel zur Wickelachse 6 ausgerichtet sind. Desweiteren sind die Wellen oder Falten 11 der beiden Abschnitte 9"a und 9"c zueinander gegensinnig gegenüber der Wickelachse 6 geneigt.

Diese modifizierte erste Bahn 9" wird dann auf eine zweite Bahn 10" aus dem ebenen oder glatten zweiten Bahnmaterial 10 aufgelegt. Anschließend wird dieser Verbund um die Wickelachse 6 aufgewickelt. Die einzelnen Abschnitte 9"a, 9"b, 9"c der modifizierten ersten Bahn 9" sind in der Wickelrichtung 24 so dimensioniert, dass sich beim Aufwickeln in radialer Richtung eine Struktur ergibt, bei der sich erste Ringe oder Spiralen 16, dritte Spiralen oder Ringe 19, zweite Spiralen oder Ringe 17 und wieder dritte Spiralen oder Ringe 19 mehr oder weniger regelmäßig abwechseln.

Die Herstellung der Gleichrichterstruktur 21 gemäß Fig. 5 ist vergleichsweise einfach realisierbar. Gemäß Fig. 8 wird hierzu eine erste Bahn 9'" aus gewelltem oder gefaltetem ersten Bahnmaterial 9 vorbereitet, wobei die Falten oder Wellen 11 parallel zur Wickelachse 6 orientiert sind. Diese erste Bahn 9"' wird auf eine zweite Bahn 10'" aus glattem oder ebenem zweiten Bahnmaterial 10 aufgelegt und zusammen mit diesem um die Wickelachse 6 aufgewickelt. Hierdurch ergibt sich dann die Struktur gemäß Fig. 5. Ebenso ist es möglich, vor dem Aufwickeln mehrere Paare von ersten Bahnen 9'" aus erstem Bahnmaterial 9 und zweite Bahnen 10'" aus zweitem Bahnmaterial 10 aufeinander zu schichten und anschließend gemeinsam um die Wickelachse 6 aufzuwickeln.

### Bezugszeichenliste

- 1: Kanalabschnitt
- 2: Fluidströmung
- 3: Fluidströmung
- 4: Vorrichtung
- 5: Drallerzeugerstruktur
- 6: Längsmittelachse / Wickelachse
- 7: Drallströmung
- 8: Drallströmung
- 9: erstes Bahnmaterial
- 10: zweites Bahnmaterial
- 11: Welle/Falte
- 12: Kanal
- 13: erste Richtung
- 14: Achse
- 15: zweite Richtung
- 16: erster Ring/erste Spirale
- 17: zweiter Ring/zweite Spirale
- 18: Axialströmung
- 19: dritter Ring/dritte Spirale
- 20: Mischzone
- 21: Gleichrichterstruktur
- 22: Kanal
- 23: axial ausgerichtete Strömung
- 24: Wickelrichtung
- 25: Pfeil

## Patentansprüche

1. Verfahren zum Vermischen von wenigstens zwei separaten Fluidströmungen (2,3), insbesondere für einen Brenner einer Kraftwerksanlage, bei dem aus den zu vermischenden Fluidströmungen (2,3) mehrere spiral- oder ringförmige und bezüglich einer Längsmittelachse (6) konzentrische Drallströmungen (7,8) erzeugt werden, derart, dass bezüglich der Längsmittelachse (6) radial benachbarte Drallströmungen (7,8) gegensinnige Drehrichtungen aufweisen,
**dadurch gekennzeichnet,**
**dass** wenigstens zwischen zwei benachbarten Drallströmungen (7,8) eine ringförmige, konzentrische, drallfreie Axialströmung (18) erzeugt wird.

2. Verfahren nach Anspruch 1,
**dadurch gekennzeichnet,**
**dass** aus den konzentrischen, ringförmigen Strömungen (7,8) stromab einer Mischzone (20) eine drallfreie Axialströmung (23) erzeugt wird.

3. Vorrichtung zum Vermischen von wenigstens zwei separaten Fluidströmungen (2,3) mit mehreren, bezüglich einer Längsmittelachse (6) in konzentrischen Ringen (16,17,19) angeordneten Kanälen (12),
- wobei die Kanäle (12) erste Ringe (16) oder erste Spiralen (16) ausbilden, in denen die Kanäle (12) in einer ersten Richtung (13) gegenüber der Längsmittelachse (6) in Umfangsrichtung so geneigt sind, dass sie bei ihrer Durchströmung für jeden ersten Ring (16) oder jede erste Spirale (16) jeweils eine in der ersten Richtung (13) drehende Ringdrallströmung (7) erzeugen,
- wobei die Kanäle (12) zweite Ringe (17) oder zweite Spiralen (17) ausbilden, in denen die Kanäle (12) in einer zur ersten Richtung (13) gegensinnigen zweiten Richtung (15) gegenüber der Längsmittelachse (6) in Umfangsrichtung so geneigt sind, dass sie bei ihrer Durchströmung für jeden zweiten Ring (17) oder für jede zweite Spirale (17) jeweils eine in der zweiten Richtung (15) drehende Ringdrallströmung (8) erzeugen,
- wobei sich radial zur Längsmittelachse (6) erste Gruppen mit jeweils mindestens einem ersten Ring (16) oder mindestens einer ersten Spirale (16) und zweite Gruppen mit jeweils wenigstens einem zweiten Ring (17) oder wenigstens einer zweiten Spirale (17) abwechseln,
**dadurch gekennzeichnet,**
- **dass** die Kanäle (12) dritte Ringe (19) oder dritte Spiralen (19) ausbilden, in denen die Kanäle (12) parallel zur Längsmittelachse (6) verlaufen,
- **dass** dritte Gruppen mit jeweils wenigstens einem dritten Ring (19) oder wenigstens einer dritten Spirale (19) jeweils radial zwischen einer ersten Gruppe und einer zweiten Gruppe angeordnet sind.

4. Vorrichtung nach Anspruch 3,
**dadurch gekennzeichnet,**
- **dass** die ersten und zweiten Ringe oder Spiralen (16,17) oder die ersten und zweiten und dritten Ringe oder Spiralen (16,17,19) in einer Drallerzeugerstruktur (5) angeordnet sind,
- **dass** stromab der Drallerzeugerstruktur (5) und beabstandet dazu eine Gleichrichterstruktur (21) angeordnet ist, die ausschließlich parallel zur Längsmittelachse (6) verlaufende Kanäle (22) enthält.

5. Vorrichtung nach Anspruch 4,
**dadurch gekennzeichnet,**
**dass** die Kanäle (22) der Gleichrichterstruktur (21) kürzer sind und/oder größere Querschnittsflächen aufweisen als die Kanäle (12) der Drallerzeugerstruktur (5).

6. Vorrichtung nach einem der Ansprüche 3 bis 5,
**dadurch gekennzeichnet,**
**dass** einige der Kanäle (12) katalytisch aktive Oberflächen aufweisen, während die anderen Kanäle (12) katalytisch inaktive Oberflächen besitzen.

7. Vorrichtung nach einem der Ansprüche 3 bis 6,
**dadurch gekennzeichnet,**
**dass** radial benachbarte Kanäle (12) der ersten und zweiten Ringe oder Spiralen (16,17) oder der ersten und zweiten und dritten Ringe oder Spiralen (16,17,19) über wenigstens einen gasdurchlässigen Abschnitt miteinander kommunizieren.

8. Vorrichtung nach einem der Ansprüche 3 bis 7,
**dadurch gekennzeichnet,**
**dass** die Neigung der Kanäle (12) gegenüber der Längsmittelachse (6) mit zunehmendem Abstand von der Längsmittelachse (6) zunimmt.

9. Vorrichtung nach einem der Ansprüche 3 bis 8,
**dadurch gekennzeichnet,**
- **dass** die Vorrichtung (4) radial zur Längsmittelachse (6) mehrere Schichten aus einem gewellten oder gefalteten ersten Bahnmaterial (9) aufweist, dessen Wellen oder Falten (11) die Kanäle (12) bilden,
- **dass** radial zwischen zwei benachbarten Schichten jeweils eine Zwischenschicht aus einem flachen oder glatten zweiten Bahnmaterial (10) angeordnet ist,
- **dass** die Bahnmaterialien (9,10) bezüglich der Längsmittelachse (6) konzentrisch und ringförmig oder spiralförmig geschichtet sind.

10. Vorrichtung nach einem der Ansprüche 3 bis 9,
**dadurch gekennzeichnet,**
**dass** benachbarte Kanäle (12) miteinander kommunizieren, derart, dass bei einer Durchströmung der Kanäle (12) eine kanalübergreifende Strömungsdurchmischung stattfinden.

11. Verfahren zur Herstellung einer Vorrichtung gemäß Anspruch 9,
- bei dem eine erste Bahn (9_{I}) aus dem ersten Bahnmaterial (9) so positioniert wird, dass seine Wellen oder Falten (11) gegenüber einer Wickelachse (6) in einer ersten Richtung (13) geneigt sind,
- bei dem auf die erste Bahn (9_{I}) eine zweite Bahn (10_{II}) aus dem zweiten Bahnmaterial (10) aufgelegt wird,
- bei dem auf die zweite Bahn (10_{II}) eine dritte Bahn (9_{III}) aus dem ersten Bahnmaterial (9) so aufgelegt wird, dass seine Wellen oder Falten (11) parallel zur Wickelachse (6) verlaufen,
- bei dem auf die dritte Bahn (9_{III}) eine vierte Bahn (10_{IV}) aus dem zweiten Bahnmaterial (10) aufgelegt wird,
- bei dem auf die vierte Bahn (9_{IV}) eine fünfte Bahn (9_{V}) aus dem ersten Bahnmaterial (9) so aufgelegt wird, dass seine Wellen oder Falten (11) gegenüber der Wickelachse (6) in einer entgegengesetzt zur ersten Richtung (13) geneigten zweiten Richtung (15) geneigt sind,
- bei dem auf die fünfte Bahn (9_{V}) eine sechste Bahn (10_{VI}) aus dem zweiten Bahnmaterial (10) aufgelegt wird,
- bei dem auf die sechste Bahn (10_{VI}) eine siebte Bahn (9_{VII}) aus dem ersten Bahnmaterial (9) so aufgelegt wird, dass seine Wellen oder Falten (11) parallel zur Wickelachse (6) verlaufen,
- bei dem auf die siebte Bahn (9_{VII}) eine achte Bahn (10_{VIII}) aus dem zweiten Bahnmaterial (10) aufgelegt wird,
- bei dem die so gebildeten Bahnenschichten um die Wickelachse (6) spiralförmig aufgewickelt werden.

12. Verfahren zum Herstellen einer Vorrichtung (4) gemäß Anspruch 9,
- bei dem eine erste Bahn (9") aus mehreren Abschnitten (9"a, 9"b, 9"c) des ersten Bahnmaterials (9) hergestellt wird, wobei die Abschnitte (9"a, 9"b, 9"c) in einer Wickelrichtung (24) aufeinanderfolgen, wobei auf einen ersten Abschnitt (9"a), dessen Wellen oder Falten (11) in einer ersten Richtung gegenüber der Wickelachse (6) geneigt sind, ein zweiter Abschnitt (9"b) folgt, dessen Wellen oder Falten (11) parallel zur Wickelachse (6) ausgerichtet sind, wobei auf den zweiten Abschnitt (9"b) ein dritter Abschnitt (9"c) folgt, dessen Wellen oder Falten (11) gegensinnig zu den Wellen oder Falten (11) des ersten Abschnitts (9"a) gegenüber der Wickelachse (6) geneigt sind, wobei auf den dritten Abschnitt (9"c) wieder ein zweiter Abschnitt (9"b) folgt,
- bei dem auf die erste Bahn (9") eine zweite Bahn (10") aus dem zweiten Bahnmaterial (10) aufgelegt wird,
- bei dem die so gebildeten Bahnenschichten um die Wickelachse (6) spiralförmig aufgewickelt werden.

## Claims

1. Method for mixing at least two separate fluid flows (2, 3), in particular for a burner of a power plant, wherein from the fluid flows (2, 3) to be mixed, several helical or annular swirl flows (7, 8) are generated which are concentric relative to a longitudinal centre axis (6), such that swirl flows (7, 8) which are radially adjacent relative to the longitudinal centre axis (6) have opposite directions of rotation,
**characterised in that**
an annular, concentric, swirl-free axial flow (18) is generated at least between two adjacent swirl flows (7, 8).

2. Method according to claim 1, **characterised in that** from the concentric, annular flows (7, 8), a swirl-free axial flow (23) is generated downstream of a mixing zone (20).

3. Method for mixing at least two separate fluid flows (2, 3) with a plurality of channels (12) arranged in concentric rings (16, 17, 19) relative to a longitudinal centre axis (6),
- wherein the channels (12) form first rings (16) or first spirals (16) in which the channels (12) are inclined, in the peripheral direction, in a first direction (13) relative to the longitudinal centre axis (6), such that on through-flow, for each first ring (16) or first spiral (16), they generate an annular swirl flow (7) rotating in the first direction (13),
- wherein the channels (12) form second rings (17) or second spirals (17) in which the channels (12) are inclined, in the peripheral direction, in a second direction (15) opposite the first direction (13) relative to the longitudinal centre axis (6), such that on through-flow, for each second ring (17) or second spiral (17), they generate an annular swirl flow (8) rotating in the second direction (15),
- wherein first groups each with at least one first ring (16) or at least one first spiral (16), and second groups each with at least one second ring (17) or at least one second spiral (17), alternate radially to the longitudinal centre axis (6),
**characterised in that**
- the channels (12) form third rings (19) or third spirals (19) in which the channels (12) run parallel to the longitudinal centre axis (6),
- third groups, each with at least one third ring (19) or at least one third spiral (19), are each arranged radially between a first group and a second group.

4. Device according to claim 3, **characterised in that**
- the first and second rings or spirals (16, 17) or the first and second and third rings or spirals (16, 17, 19) are arranged in a swirl generator structure (5),
- downstream of the swirl generator structure (5) and spaced therefrom, a rectifier structure (21) is arranged which contains only channels (22) running parallel to the longitudinal centre axis (6).

5. Device according to claim 4, **characterised in that** the channels (22) of the rectifier structure (21) are shorter and/or have larger cross-section areas than the channels (12) of the swirl generator structure (5).

6. Device according to any of claims 3 to 5, **characterised in that** some of the channels (12) have catalytically active surfaces, while the other channels (12) have catalytically inactive surfaces.

7. Device according to any of claims 3 to 6, **characterised in that** radially adjacent channels (12) of the first and second rings or spirals (16, 17), or of the first and second and third rings or spirals (16, 17, 19), communicate with each other via at least one gas-permeable portion.

8. Device according to any of claims 3 to 7, **characterised in that** the incline of the channels (12) relative to the longitudinal centre axis (6) increases as the distance from the longitudinal centre axis (6) increases.

9. Device according to any of claims 3 to 8, **characterised in that**
- the device (4) has several layers of an undulating or folded first web material (9) radially to the longitudinal centre axis (6), the waves or folds (11) of which form the channels (12),
- an intermediate layer of a flat or smooth second web material (10) is arranged radially between two adjacent layers respectively,
- the web materials (9, 10) are layered concentrically or in annular or spiral form relative to the longitudinal centre axis (6).

10. Device according to any of claims 3 to 9, **characterised in that** adjacent channels (12) communicate with each other such that, on through-flow through the channels (12), an inter-channel flow mixing occurs.

11. Method for producing a device according to claim 9,
- in which a first web (9i) of the first web material (9) is positioned such that its waves or folds (11) are inclined in a first direction (13) relative to a winding axis (6),
- in which a second web (10ii) of the second web material (10) is laid on the first web (9i),
- in which a third web (9iii) of the first web material (9) is laid on the second web (10ii) such that its waves or folds (11) run parallel to the winding axis (6),
- in which a fourth web (10iv) of the second web material (10) is laid on the third web (9iii),
- in which a fifth web (9v) of the first web material (9) is laid on the fourth web (10iv) such that its waves or folds (11) are inclined in a second direction (15) inclined opposite the first direction (13) relative to a winding axis (6),
- in which a sixth web (10vi) of the second web material (10) is laid on the fifth web (9v),
- in which a seventh web (9vii) of the first web material (9) is laid on the sixth web (10vi) such that its waves or folds (11) run parallel to the winding axis (6),
- in which an eighth web (10viii) of the second web material (10) is laid on the seventh web (9vii),
- in which the web layers thus formed are wound in a spiral around the winding axis (6).

12. Method for producing a device (4) according to claim 9,
- in which a first web (9") is produced from several portions (9"a, 9"b, 9"c) of the first web material (9), wherein the portions (9"a, 9"b, 9"c) succeed each other in a winding direction (24), wherein a first portion (9"a), the waves or folds (11) of which are inclined in a first direction relative to a winding axis (6), is followed by a second portion (9"b), the waves or folds (11) of which are oriented parallel to the winding axis (6), wherein the second portion (9"b) is followed by a third portion (9"c), the waves or folds (11) of which are inclined in the opposite direction to the waves or folds (11) of the first portion (9"a) relative to the winding axis (6), wherein the third portion (9"c) is followed by another second portion (9"b),
- in which a second web (10") of the second web material (10) is laid on the first web (9"),
- in which the web layers thus formed are wound in a spiral around the winding axis (6).

## Revendications

1. Procédé de mélange d'au moins deux flux fluidiques (2, 3) séparés, en particulier pour un brûleur de centrale électrique, dans lequel plusieurs flux tourbillonnants (7, 8) de forme spirale ou annulaire et concentriques par rapport à un axe central longitudinal (6) sont produits à partir des flux fluidiques (2, 3) à mélanger de telle sorte que des flux tourbillonnants (7, 8) radialement voisins par rapport à l'axe central longitudinal (6) présentent des directions de rotation opposées,
**caractérisé en ce**
**qu'**un flux axial (18) exempt de tourbillon, concentrique, annulaire est produit au moins entre deux flux tourbillonnants (7, 8) voisins.

2. Procédé selon la revendication 1,
**caractérisé en ce**
**qu'**un flux axial (23) exempt de tourbillon est produit à partir des flux (7, 8) annulaires concentriques en aval d'une zone de mélange (20).

3. Dispositif de mélange d'au moins deux flux fluidiques (2, 3) séparés avec plusieurs canaux (12) disposés en anneaux (16, 17, 19) concentriques par rapport à un axe central longitudinal (6),
- les canaux (12) constituant des premiers anneaux (16) ou des premières spirales (16) dans lesquels/lesquelles les canaux (12) sont inclinés dans la direction circonférentielle dans une première direction (13) par rapport à l'axe central longitudinal (6), de telle sorte que, lorsqu'ils sont traversés par le flux, ils produisent pour chaque premier anneau (16) ou pour chaque première spirale (16) respectivement un écoulement tourbillonnant annulaire (7) tournant dans la première direction (13),
- les canaux (12) constituant des deuxièmes anneaux (17) ou des deuxièmes spirales (17) dans lesquels/lesquelles les canaux (12) sont inclinés dans la direction circonférentielle dans une deuxième direction (15) opposée à la première direction (13) par rapport à l'axe central longitudinal (6) de telle sorte que, lorsqu'ils sont traversés par le flux, ils produisent pour chaque deuxième anneau (17) ou pour chaque deuxième spirale (17) respectivement un écoulement tourbillonnant annulaire (7) tournant dans la deuxième direction (15),
- des premiers groupes avec respectivement au moins un premier anneau (16) ou au moins une première spirale (16) et des deuxièmes groupes avec respectivement au moins un deuxième anneau (17) ou au moins une deuxième spirale (17) alternant radialement à l'axe central longitudinal (6),
**caractérisé en ce que**
- les canaux (12) constituent des troisièmes anneaux (19) ou des troisièmes spirales (19) dans lesquels/lesquelles les canaux (12) sont parallèles à l'axe central longitudinal (6),
- des troisièmes groupes avec respectivement au moins un troisième anneau (19) ou au moins une troisième spirale (19) sont disposés respectivement radialement entre un premier groupe et un deuxième groupe.

4. Dispositif selon la revendication 3,
**caractérisé en ce que**
- les premiers et deuxièmes anneaux ou spirales (16, 17) ou les premiers et deuxièmes et troisièmes anneaux ou spirales (16, 17, 19) sont disposés dans une structure génératrice de tourbillon (5),
- en aval de la structure génératrice de tourbillon (5) et de façon espacée de celle-ci, il est disposé une structure de redresseur (21) qui contient exclusivement des canaux (22) parallèles à l'axe central longitudinal (6).

5. Dispositif selon la revendication 4,
**caractérisé en ce que**
les canaux (22) de la structure de redresseur (21) sont plus courts et/ou présentent des surfaces de section transversale plus grandes que les canaux (12) de la structure génératrice de tourbillon (5).

6. Dispositif selon l'une des revendications 3 à 5,
**caractérisé en ce que**
certains des canaux (12) présentent des surfaces actives au plan catalytique tandis que les autres canaux (12) possèdent des surfaces inactives au plan catalytique.

7. Dispositif selon l'une des revendications 3 à 6,
**caractérisé en ce que**
des canaux, radialement voisins, des premiers et deuxièmes anneaux ou spirales (16, 17) ou des premiers et deuxièmes et troisièmes anneaux ou spirales (16, 17, 19) communiquent entre eux par le biais d'au moins un tronçon perméable aux gaz.

8. Dispositif selon l'une des revendications 3 à 7,
**caractérisé en ce que**
l'inclinaison des canaux (12) par rapport à l'axe central longitudinal (6) augmente avec l'augmentation de la distance à l'axe central longitudinal (6).

9. Dispositif selon l'une des revendications 3 à 8,
**caractérisé en ce que**
- le dispositif (4) présente, radialement à l'axe central longitudinal (6), plusieurs couches d'un premier matériau de bande (9) ondulé ou plié dont les ondulations ou les plis (11) forment les canaux (12),
- radialement entre deux couches voisines, il est disposé respectivement une couche intermédiaire d'un deuxième matériau de bande (10) plat ou lisse,
- les matériaux de bande (9, 10) sont déposés en couches de façon concentrique par rapport à l'axe central longitudinal (6) et sous forme annulaire ou spirale.

10. Dispositif selon l'une des revendications 3 à 9,
**caractérisé en ce que**
des canaux (12) voisins communiquent entre eux de telle sorte que, lorsque les canaux (12) sont traversés par le flux, il se produit une mélange des flux qui couvre plusieurs canaux.

11. Procédé de fabrication d'un dispositif selon la revendication 9,
- dans lequel une première bande (9_{I}) du premier matériau de bande (9) est positionnée de sorte que ses ondulations ou plis (11) sont incliné(e)s dans une première direction (13) par rapport à un axe d'enroulement (6),
- dans lequel une deuxième bande (10_{II}) du deuxième matériau de bande (10) est placée sur la première bande (9_{I}),
- dans lequel une troisième bande (9_{III}) du premier matériau de bande (9) est placée sur la deuxième bande (10_{II}) de sorte que ses ondulations ou plis (11) sont parallèles à l'axe d'enroulement (6),
- dans lequel une quatrième bande (10_{IV}) du deuxième matériau de bande (10) est placée sur la troisième bande (9_{III}),
- dans lequel une cinquième bande (9v) du premier matériau de bande (9) est placée sur la quatrième bande (9_{IV}) de sorte que ses ondulations ou plis (11) sont, par rapport à l'axe d'enroulement (6), incliné(e)s dans une deuxième direction (15) inclinée de façon opposée à la première direction (13),
- dans lequel une sixième bande (10_{VI}) du deuxième matériau de bande (10) est placée sur la cinquième bande (9v),
- dans lequel une septième bande (9_{VII}) du premier matériau de bande (9) est placée sur la sixième bande (10_{VI}) de sorte que ses ondulations ou plis (11) sont parallèles à l'axe d'enroulement (6),
- dans lequel une huitième bande (10_{VIII}) du deuxième matériau de bande (10) est placée sur la septième bande (9_{VII}),
- dans lequel les couches de bande ainsi formées sont enroulées en forme de spirale autour de l'axe d'enroulement (6).

12. Procédé de fabrication d'un dispositif (4) selon la revendication 9,
- dans lequel une première bande (9") est fabriquée à partir de plusieurs tronçons (9"a, 9"b, 9"c) du premier matériau de bande (9), les tronçons (9"a, 9"b, 9"c) se suivant dans une direction d'enroulement (24), un deuxième tronçon (9"b) suivant un premier tronçon (9"a) dont les ondulations ou plis (11) sont incliné(e)s dans une première direction par rapport à l'axe d'enroulement (6), deuxième tronçon (9"b) dont les ondulations ou plis (11) sont orienté(e)s parallèlement à l'axe d'enroulement (6), un troisième tronçon (9"c), dont les ondulations ou plis (11) sont incliné(e)s en sens opposé aux ondulations ou plis (11) du premier tronçon (9"a) par rapport à l'axe d'enroulement (6), suivant le deuxième tronçon (9"b), de nouveau un deuxième tronçon (9"b) suivant le troisième tronçon (9"c),
- dans lequel une deuxième bande (10") du deuxième matériau de bande (10) est placée sur la première bande (9"),
- dans lequel les couches de bande ainsi formées sont enroulées en forme de spirale autour de l'axe d'enroulement (6).
